## Europäisches Patentamt

## European Patent Office

## Office européen des brevets

(11) Numéro de publication: **0 126 667**
**B1**

(12)

# FASCICULE DE BREVET EUROPÉEN

(45) Date de publication du fascicule du brevet:
15.10.86

(21) Numéro de dépôt: 84400818.5

(22) Date de dépôt: 20.04.84

(51) Int. Cl.⁴: **A 01 K 7/06**

(54) **Perfectionnement aux abreuvoirs à tube pour animaux.**

(30) Priorité: 24.05.83 FR 8308501

(43) Date de publication de la demande:
28.11.84 Bulletin 84/48

(45) Mention de la délivrance du brevet:
15.10.86 Bulletin 86/42

(84) Etats contractants désignés:
AT BE CH DE GB IT LI LU NL SE

(56) Documents cité:
EP-A-0 043 413
FR-A-2 413 874
US-A-3 734 063

(73) Titulaire: LA BUVETTE, 15, rue de l'Arquebuse,
F-08000 Charleville- Mezieres (FR)

(72) Inventeur: Gustin, Jean- Pierre, 15, rue de
l'Arquebuse, F-08000 Charleville Mezieres (FR)

(74) Mandataire: Loyer, Bertrand, Cabinet Pierre Loyer
18, rue de Mogador, F-75009 Paris (FR)

## Description

La présente invention a pour objet un perfectionnement aux abreuvoirs à tube pour animaux tels que décrits doues le preambule de la revendication 1.

Il est connu de réaliser des abreuvoirs constitués par un support portant un tube, relié à une canalisation d'eau sous pression, l'extrémité inférieure dudit tube faisant saillie dans un bol porté par le support. Les tubes de ces abreuvoirs sont mobiles et comportent des systèmes à clapets avec éventuellement des ressorts de compression, tels que lorsque l'animal déplace avec son museau l'extrémité du tube le déplacement de cer dernier provoque l'ouverture d'un clapet et l'écoulement de l'eau.

Un tel abreuvoir est notamment décrit dans le brevet FR—A—2413874 déposé le 4 janvier 1978, ainsi que dans le brevet européen EP—A—0043413.

La présente invention concerne un perfectionnement à ce genre d'abreuvoir permettant d'en abaisser considérablement le le prix de revient tout en le rendant beaucoup plus faible.

L'abreuroir selon la présente invention est caractérisé par le fait que ledit tube est un tube en matière souple qui est emmanché sur le tube d'alimentation en eau ce dit tube souple comportant intérieurement deux épaulement circulaires reliés entre-eux par un alésage central traversé de part en par ladite tige rigide, ladite tige portant ledit clapet reposant sur l'épaulement circulaire supérieur et une butée réglable pour ledit ressort prenant appui suir l'épaulement inférieur de telle sorte que le clapet est maintenu en appui par la traction exercée par le ressort et que toute déformation du tube souple provoque un soulèvement du clapet sur son siège.

Selon une autre caractéristique, les deux épaulements circulaires supérieur (11) et inférieur (16) sont disposés au voisinage des deux extrémités du tube souple (5) de telle sorte que ce dernier est pratiquement traversé de part en part.

A titre d'exemple non limitatif et pour faciliter la compréhension de l'invention, on a représenté au dessin annexé:

Figure 1 vue latérale en couple d'un exemple de réalisation de l'invention;

Figure 2, une vue partielle de la figure 1 illustrant une variante de montage.

En se reportant à cette figure, on voit que l'abreuvoir est constitué par une pièce 1 comportent d'une part un support 2 et d'autre part un bol 3.

Le support 2 est conique et reçoit l'extrémité supérieure 4, conique également, d'un tube creux et souple 5. Le support 2 est muni à sa partie supérieure d'un filetage 6 recevant un bouchon 7 dont l'alésage interne 8 est conique et s'adapte à la paroi conique 4 du tube 5.

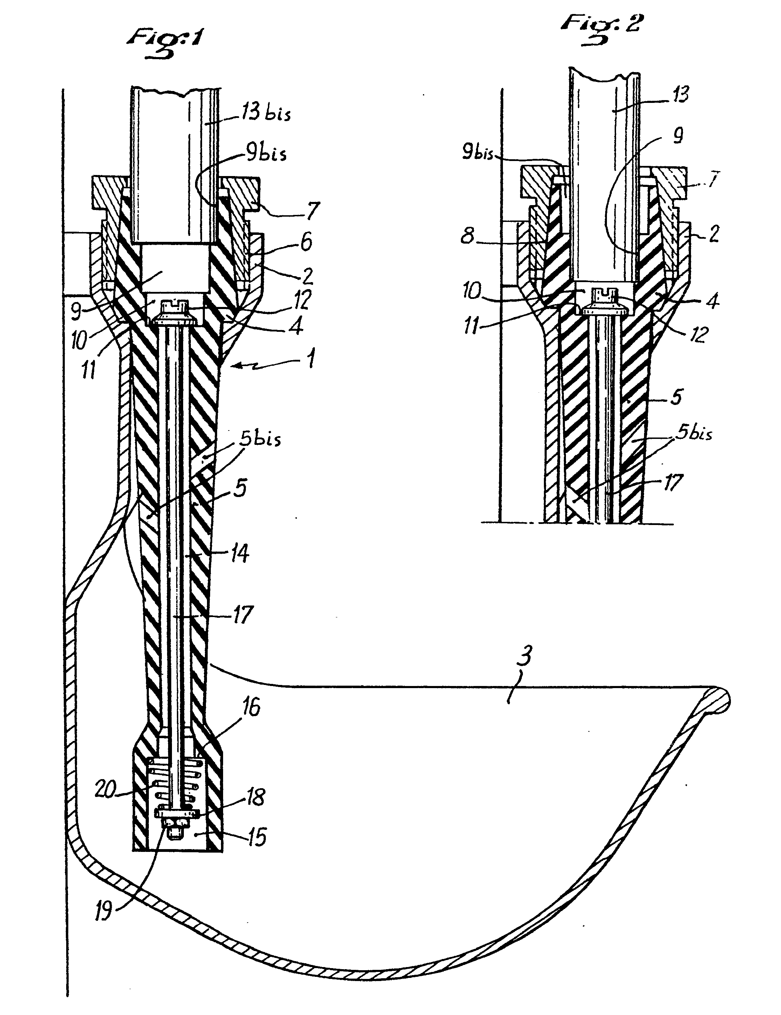

L'extrémité supérieure 4 du tube 5 comporte trois alésages cylindriques superposés 9 bis, 9 et 10: le premier alésage 9 bis étant destiné à recevoir un tube d'alimentation 13 bis d'un diamètre normalisé de 3/4" (figure 1); le deuxième alésage 9 étant destiné à recevoir un tube d'alimentation 13 d'un diamètre normalisé de 1/2" (figure 2); le troisième alésage 10 constituant une chambre au fond de laquelle est ménagé un siège 11 pour un clapet 12. Le tube d'alimentation 13 est enfoncé à force soit dans l'alésage 9 bis, soit dans l'alésage 9 selon son diamètre et le serrage du bouchon 7 applique par écrasement les paroi de l'extrémité 4 du tube 5 contre le tube 13 en réalisant ainsi un raccordement étanche.

Le tube 5 comporte un alésage central 14 qui, à sa base débouche dans un alésage cylindrique 15 de plus grand diamètre, séparé du précédent par un épaulement circulaire 16.

L'alésage 14 est traversé par une tige métallique 17. A son extrémité supérieure, la tige 17 porte une rondelle plate 12 faisant clapet et à son extrémité inférieure une rondelle 18 maintenue par un écrou 19. Entre la rondelle 18 et l'épaulement circulaire 16 est placé un ressort 20.

Ce ressort 20 exerce donc permanence une traction sur la tige 17, ce qui maintient la rondelle 12 sur son siège 11, et maintient donc fermé ledit clapet.

Lorsque le tube 5 est déplacé, par exemple par le museau d'un animal poussant sur son extrémité inférieure le tube 5, qui est flexible, se déforme et il en résulte que la rondelle plate 12 n'est plus appliquée sur tout le pourtour du siège 11 et l'eau est admise dans l'alésage 14 et coule dans le bol 3.

Ce dispositif d'une extrême simplicité et d'un coût très économique présente, en outre, les avantages suivants:

— Un seul et unique tube 5 du haut en bas. Pas de pièces superposées avec filetage et joint anti-fuite à démonter et remonter. Fiabilité totale.

— Pas de raccordement par filetage à la canalisation.

Ce qui élimine l'emploi d'une filière et le recours aux produits d'étanchéité (pâte-téflon, etc.), ce qui évite en outre et plus tard, les risque inhérents de "grippage" et d'oxydation sur les filets.

— Deux possibilités de raccordement en diamètre 1/2" ou 3/4" pour la même robinetterie et sans pièce supplémentaire.

— Gains de temps et d'argent très appréciables au montage et durant l'entretien.

Pour certains animaux, comme pour les porcs par exemple, on peut munir la base du tube 5 qui vient de moulage d'une carapace métallique, qui lui serait rattaché par surmoulage, évitant d'offrir à l'animal une matière tendre qu'il peut mâchonner et avaler.

On peut également, comme cela est représenté aux figures 1 et 2 disposer le long du tube 5, en aval du clapet 12 un ou plusieurs orifices de mises à l'air libre 5 bis afin d'éviter tout effet de siphonnage dans le tube.

## Revendications

1. Abreuvoir automatique pour animaux, du type comprenant un tube (5), porté par un support (2) et faisant saillie à sa partie inférieure dans un bol (3) porté par le même support (2), ledit tube (5) portant une tige (17) rigide disposée à l'intérieur dont l'extrémité supérieure porte un clapet (12) obturant l'arrivée d'eau et un ressort (20) pour compresser le clapet (12), caractérisé par le fait que ledit tube (5) est un tube en matière souple qui est emmanché sur le tube d'alimentation en eau (13, 13 bis), ce dit tube souple (5) comportant intérieurement deux épaulements circulaires (11, 16) reliés entre-eux par un alésage central (14) traversé de part en part par ladite tige (17) rigide, ladite tige portant ledit clapet (12) reposant sur l'épaulement circulaire supérieur (11) et une butée réglable (18, 19) pour ledit ressort (20) prenant appui sur l'épaulement inférieur (16) de telle sorte que le clapet (12) est maintenu en appui par la traction exercée par le ressort (20) et que toute déformation du tube souple (5) provoque un soulèvement du clapet (12) sur son siège.

2. Abreuvoir selon la revendication 1, caractérisé par le fait que les deux épaulements circulaires supérieur (11) et inférieur (16) sont disposés au voisinage des deux extrémités du tube souple (5) de telle sorte que ce dernier est pratiquement traversé de part en part.

3. Abreuvoir selon la revendication 2, dans lequel le tube souple (5) est muni à sa partie supérieure d'une extrémité de fixation (4) sont la paroi extérieur conique est serrée entre deux surfaces coniques (2, 8) ce qui écrase la paroi de son alésage central cylindrique (9) contre la paroi du tube d'alimentation (13) introduit à force dans ledit alésage central (9).

4. Abreuvoir selon la revendication 3, dans lequel le tube souple (5) est muni à sa partie supérieure de deux alésage cylindriques superposés (9) et (9 bis) autorisant le raccordement en eau à deux diamètres usuels de tube différents (13) et (13 bis), sans faire intervenir pour autant, une manoeuvre ou une pièce supplémentaire.

5. Abreuvoir selon l'une quelconque des revendications 1 à 4, dans lequel la partie inférieure du tube creux (5) qui vient de moulage peut recevoir une eneveloppe métallique sou se terminer par un tube métallique qui lui serait rattaché par surmoulage.

6. Abreuvoir selon l'une quelconque des revendications 1 à 5, dans lequel le tube (5) comporte un ou plusieurs orifices (5 bis) de mise à l'air libre en aval du clapet (12).

## Patentansprüche

1. Automatische Viehtränke mit einem von einer Haltevorrichtung (2) getragenen und im unteren Teil in einen an der gleichen Haltevorrichtung (2) befestigten Trog (3) hineinragenden Rohr (5) mit einer starren Spindel (17) im Rohrinneren, an deren oberen Ende sich eine Ventilklappe (12) zum Sperren der Wasserzufuhr befindet und die eine Feder (20) zur Druckausübung auf die Ventilklappe (12) aufweist, dadurch gekennzeichnet daß das Rohr ein an die Wasserzufuhr (13, 13 bis) angeschlossenes Schlauchrohr (5) ist, das innen zwei Ringschlultern (11, 16) jeweils als Abschluß einer mittleren Bohrung (14) besitzt, durch die die starre Spindel (17) mit der auf der oberen Ringschulter (11) aufliegenden Ventilklappe (12) und einem verstellbaren Anschlag (18, 19) für die auf der unteren Ringschulter (16) aufsitzenden Feder (20) führt, so daß die Ventilklappe (12) durch die Zugwirkung der Feder (20) schlüssig aufliegt und jede Verformung des Schlauchrohrs (5) ein Abheben der Ventilklappe (12) vom Ventilsitz bewirkt.

2. Tränke nach Anspruch 1, dadurch gekennzeichnet, daß sich die obere (11) und untere (16) Ringschulter in der Nähe der Schlauchrohrenden (5) befinden, so daß der Schlauch praktisch vollständig durchquert wird.

3. Tränke nach Anspruch 2, dadurch gekennzeichnet, daß das Schlauchrohr (5) im oberen Teil einen Befestigungsteil (4) mit konischer Außenwand aufweist, die zwischen zwei konische Flächen (2, 8) eingespannt ist, so daß die Wand der zylindrischen Mittelbohrung (9) gegen die Wand der mit Kraft in die Mittelbonrung (9) hineingepreßten Wasserzufuhr (13) drückt.

4. Tränke nach Anspruch 3, dadurch gekennzeichnet, daß das Schlauchrohr (5) im oberen Teil übereinander zwei zylindrische Bohrungen (9) und (9 bis) zum Anschluß von zwei gängigen Wasserzuleitungsdurchmessern (13) und (13 bis) aufweist, um einen zusätzlichen Handgriff bzw. Bauteil zu vermeiden.

5. Tränke nach einem der Ansprüche 1—4, bei der der untere formgepreßte Teil des Schlauchrohrs (5) mit einer Metallhülle versehen werden bzw. mit einem aufgepreßten Überformmetallrohr enden kann.

6. Tränke nach einem der Ansprüche 1—5, bei der das Schlauchrohr (5) unter der Ventilklappe (12) eine oder mehrere Entlüftungsöffnungen (5 bis) aufweist.

## Claims

1. An automatic drinking trough for animals, of the type comprising a tube (5) carried by a support (2) and protruding with its lower end into a bowl (3) carried by the same support (2), said tube (5) carrying a rigid stem (17) placed therein, the upper end of said stem (17) carrying a poppet valve (12) for sealing the water inlet and a spring (20) for biasing said valve (12) against its seat (11), characterized by the fact that said tube (5) is a tube made of a flexible material which is fitted over the water feed pipe (13, 13 bis), said flexible tube (5) comprising interiorly two circular shoulders (11, 16) connected together by a central bore (14) along the full inside length of which extends said rigid stem (17), said stem carrying said valve (12) resting on the upper circular shoulder (11), and an adjustable stop (18, 19) for said spring (20) resting against the lower shoulder (16), whereby the valve (12) is maintained against its seat (11) by the traction exercised by the spring (20), so that any deformation of the flexible tube (5) will cause said valve (12) to be raised away from its seat (11).

2. A drinking trough according to claim 1, characterized in that the two upper (11) and lower (16) circular shoulders are provided in the vicinity of the two ends of the flexible tube (5) so that said tube is practically being run across along its full length by said stem (17).

3. A drinking trough according to claim 2, in which the flexible tube (5) is provided in its upper portion with a fixation end (4), the conical exterior wall of which is clamped between two conical bearings (2, 8), whereby the wall of its cylindrical central bore (9) is squeezed against the wall of the feed pipe (13) which is forcibly engaged into said central bore (9).

4. A drinking trough according to claim 3, in which the flexible tube (5) is provided in its upper portion with two superposed cylindrical bores (9) and (9 bis) for allowing said trough to be connected to feed pipes having either of two different usual diameters (13) and (13 bis) without requiring any additional manipulation or connecting part.

5. A drinking trough according to any of claims 1 to 4, in which the lower portion of the moulded flexible tube (5) may be provided with a metal casing or may have an end portion formed of a metal tube attached to said tube by being moulded mover it.

6. A drinking trough according to any of claims 1 to 5, in which the flexible tube (5) comprises one or several venting holes (5 bis) downstream of the poppet valve (12).

Fig:1

Fig:2